# EUROPEAN PATENT APPLICATION

(11) **EP 2 333 676 A1**
(43) Date of publication of application: **15.06.2011**
(21) Application number: 10015659.5
(22) Date of filing: 10.12.2010
(51) Int. Cl.: G06F 17/30

(54) **Method for information retrieval in a communication network**

(30) Priority: 10.12.2009 EP 09015336; 10.12.2009 US 285253 P
(71) Applicant: Deutsche Telekom AG, 53113 Bonn (DE)
(72) Inventor: Meyer, Dirk, 53347 Alfter (DE)
(74) Representative: Schwöbel, Thilo K.

(57) **Abstract**

The invention relates to a method, a system, a program, a computer program product and a mobile source device for information retrieval, wherein the information retrieval comprises the transmission of a reference information from a mobile source device to a network instance, the transmission of a target information to the network instance, wherein the target information comprises information related to a selected target device, and the transmission of a usable information from the network instance to the target device, wherein the usable information is related to the reference information.

## Description

### BACKGROUND

The present invention relates to a method, a system, a program and a computer program product for information retrieval in a communication network.

Such methods are described e.g. in US 2005/0082370, which discloses a method of decoding and analyzing a barcode. A mobile device with a digital camera images the barcode, transmits the barcode image to a server and an associated media content is transmitted to the mobile device.

The drawback of methods according to the prior art Is that it is not allowed to select among specific target devices to display the web content that is associated with the barcode on this target device while the devices have no direct connection.

This is only one drawback of that is solved by the present invention explained in the following.

### SUMMARY

An object of the present invention is to provide a method, a system, a program and a computer program product for information retrieval in a communication network.

The object of the present invention is achieved by a method for information retrieval in a communication network, wherein information retrieval comprises at least three steps, wherein a first step comprises the transmission of a reference information from a mobile source device to a network instance, wherein a second step comprises the transmission of a target information to the network instance, wherein the target information comprises information related to a selected target device, wherein a third step comprises the transmission of a usable information from the network instance to the target device, wherein the usable information Is related to the reference information.

According to the present invention it is advantageously possible to use the usable information associated with the reference information on a specifically selected target device. The use of the usable information with such target device is possibly more comfortable because it e.g. implies a larger screen size or better speaker quality than a mobile phone. Advantageously the method according to the present invention is usable in an easy way with low costs. Any mobile device with a camera is able to capture the reference information in the form of a visible or image information e.g. a soft link or a barcode from a printed media (also called mobile tagging). Furthermore the source device and the target device do not need to have direct connectivity to be used with the method according to the present invention.

In the context of this invention the reference information is any information related to any type of usable information. The reference information is captured, received or retrieved by the source device or in any other way available on the source device. The reference information is any interpretable information (e.g. an image of a barcode) or any link information referring to any network or media content (e.g. by means of an internet link). The usable information is any media content or any link information directly linked with a media content. Media content is any content available in the communication network i.e. any type of media content (e.g. text, pictures, audio, video, multimedia, animated media, interactive media content like games). Using the usable information means e.g. displaying a text or a picture on a screen or playing a video or animated media on a screen. The target information is any information directly or indirectly identifying the target device. The target information is either interpreted by the network instance to identify the target device (e.g. using a username for the target device) or the target information directly identifies the target device without interpretation by the network instance (e.g. using the IP address of the target device). Furthermore the mobile source device is any communication device (e.g. a Mobile Smartphone) capturing, holding, retrieving or receiving any reference information. The target unit is any communication device (e.g. a TV set, eBook, Notebook, Audio/Multimedia Player) that is specifically selectable for the source device for using the associated usable information. The network instance is any communication device (e.g. a server) in the communication network that is able to receive and transmit information from the source device or the target device.

The present invention also refers to a method for information retrieval in a communication network, wherein information retrieval comprises at least three steps, wherein a first step comprises the transmission of a reference information from a mobile source device to a network instance, wherein the reference information is an image of a barcode from an accessible media or a related information that is derived from the barcode from an accessible media, wherein a second step comprises the transmission of a target information to the network instance, wherein the target information comprises information related to a selected target device, wherein a third step comprises the transmission of a usable information from the network instance to the target device, wherein the usable information is related to the reference information, wherein the first step has expired before the second step begins and wherein the second step has expired before the third step begins, wherein the usable information is a media content, the media content being used by the target device at a predetermined time or time interval, wherein the source device has a Public Land Mobile Network interface and both the reference information and the target information is transmitted via the Public Land Mobile Network interface.

By means of using the source device with a Public Land Mobile Network interface, it is advantageously possible to send both the reference information and the target information via this interface so that the usable information in form of the media content can later on be transferred to the target device. The Public Land Mobile Network interface is preferably an interface according to any of the standards of Public Land Mobile Network systems such as GSM, UMTS, or LTE.

According to the present invention, the usable information (i.e. the media content) is preferably an information that is not intended to be transferred to the source device but to the target device due to the amount of data to be transmitted.

In the following and for the sake of illustration the present invention is exemplarily described for the case that the source device captures a soft link or a barcode from an accessible media, e.g. a printed media. However it is also possible e.g. that the link is not captured but the link is already available on the source unit as it was retrieved or received from any other source.

It will be understood by a person skilled in the art that other modifications or varieties of the invention are possible without departing from the broader spirit of the invention. Such modifications are therefore to be considered as falling within the spirit and the scope of the invention and hence forming part of the invention as herein described or exemplified. Accordingly the exemplary description is to be regarded in an illustrative sense rather than in a restrictive sense.

According to the present invention it is preferred that the reference information is an image of a barcode from an accessible media. The barcode is any pattern of lines, squares, dots, hexagons or other geometric figures or symbols that leads, e.g. by way of decryption or interpretation or recognition, to a link information or a URL information (uniform resource locator). This decryption or recognition is possible to perform in the network instance or in the source device. The image is any photographic or scanned picture of the barcode. The accessible media is any media showing the image of the barcode e.g. a printed poster, Magazine or Newspaper.

According to the present invention it is thereby advantageously possible to easily use the method according to the present invention and to easily provide the reference information to users of mobile devices with a camera means.

According to the present invention it is preferred that the first step has expired before the second step begins and that the second step has expired before the third step begins or alternatively that the first step and the second step are proceeded at least partly at the same time or alternatively that the first step is proceeded after the second step.

According to the present invention it is thereby advantageously possible to flexibly use the method according to the present invention.

According to the present invention it is preferred that one or more target devices are selectable by the source device. Preferably the one or more target devices are listed in a target list that is available on the source device. Preferably the target device in the target list is related to a type of media content, wherein the type of media content is usable with the target device or accepted by the target device. Type of media content in this case is e.g. text, pictures, audio, video, multimedia or animated media.

According to the present invention it is thereby advantageously possible to easily select the adequate target device for the type of media content. For example a video media is to be played on a wide screen TV set or an eBook is to be displayed on a small portable reading device.

According to the present invention it is preferred that the source device is connected with the network instance by internet connection and the one or more target devices are connected with the network instance by internet connection. In this case internet connection is any network using e.g. HTTP or FTP.

According to the present invention it is thereby advantageously possible to easily use the method according to the present invention. Furthermore no direct connection between the source device and the target device is necessary.

According to the present invention it is preferred that the media content is used by the target device at a predetermined time, wherein preferably the predetermined time is set by the source device. Alternatively the predetermined time is set by the target device.

According to the present invention it is thereby advantageously possible to flexibly use the method according to the present invention.

According to the present invention it is preferred that the transmission of the usable information from the network instance to the target device is billed by a service provider.

According to the present invention it is thereby advantageously possible to easily imply a billing system into the method according to the present invention.

According to the present invention it is preferred that that the usable information is a media content or a link information linked with any media content. The link information is any link to a media content, e.g. a link to a network address.

According to the present invention it is thereby advantageously possible to flexibly use the method according to the present invention.

The invention further relates to a system for information retrieval, wherein the system comprises a mobile source device, a network instance and at least one target device, wherein the information retrieval comprises the transmission of a reference information from the mobile source device to the network instance, the transmission of a target information to the network instance, wherein the target information comprises information related to the target device, and the transmission of a usable information from the network instance to the target device, wherein the usable information is related to the reference information.

According to the present invention it is thereby advantageously possible to use the usable information associated with the reference information on a specifically selected target device. The use of the usable information with such target device is possibly more comfortable because it e.g. implies a larger screen size or better speaker quality than a mobile phone. Advantageously the present invention is usable in an easy way with low costs. Any mobile device with a camera is able to capture the reference information in the form of a visible or image information e.g. a soft link or a barcode from a printed media. Furthermore the source device and the target device do not need to have direct connectivity.

The invention further relates to a program comprising a computer readable program code for information retrieval, wherein the information retrieval comprises the transmission of a reference information from a mobile source device to a network instance, the transmission of a target information to the network instance, wherein the target information comprises information related to a selected target device, and the transmission of a usable information from the network instance to the target device, wherein the usable information is related to the reference information.

According to the present invention it is thereby advantageously possible to use the usable information associated with the reference information on a specifically selected target device. The use of the usable information with such target device is possibly more comfortable because it e.g. implies a larger screen size or better speaker quality than a mobile phone. Advantageously the present invention is usable in an easy way with low costs. Any mobile device with a camera is able to capture the reference information in the form of a visible or image information e.g. a soft link or a barcode from a printed media. Furthermore the source device and the target device do not need to have direct connectivity.

The invention further relates to a computer program product for information retrieval comprising a computer readable program code, wherein the information retrieval comprises the transmission of a reference information from a mobile source device to a network instance, the transmission of a target information to the network instance, wherein the target information comprises information related to a selected target device, and the transmission of a usable information from the network instance to the target device, wherein the usable information is related to the reference information.

According to the present invention it is thereby advantageously possible to use the usable information associated with the reference information on a specifically selected target device. The use of the usable information with such target device is possibly more comfortable because it e.g. implies a larger screen size or better speaker quality than a mobile phone. Advantageously the present invention is usable in an easy way with low costs. Any mobile device with a camera is able to capture the reference information in the form of a visible or image information e.g. a soft link or a barcode from a printed media. Furthermore the source device and the target device do not need to have direct connectivity.

The invention further relates to a mobile source device for information retrieval, wherein the mobile source device comprises a digital photo camera to capture an image of a barcode as a reference information, wherein the information retrieval comprises the transmission of the reference information from the mobile source device to a network instance, the transmission of a target information to the network instance, wherein the target information comprises information related to a selected target device, and the transmission of a usable information from the network instance to the target device, wherein the usable information is related to the reference information

According to the present invention it is thereby advantageously possible to use the usable information associated with the reference information on a specifically selected target device. The use of the usable information with such target device is possibly more comfortable because it e.g. implies a larger screen size or better speaker quality than a mobile phone. Advantageously the present invention is usable in an easy way with low costs. Any mobile device with a camera is able to capture the reference information in the form of a visible or image information e.g. a soft link or a barcode from a printed media. Furthermore the source device and the target device do not need to have direct connectivity.

### BRIEF DESCRIPTION OF THE DRAWINGS

Figure 1 shows schematically a cell of a mobile radio network.

Figure 2 shows schematically a principal illustration of one embodiment of the present invention.

Figure 3 shows schematically an illustration of a further embodiment of the method according to the present invention.

Figure 4 shows schematically an exemplary registration process for the target unit.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

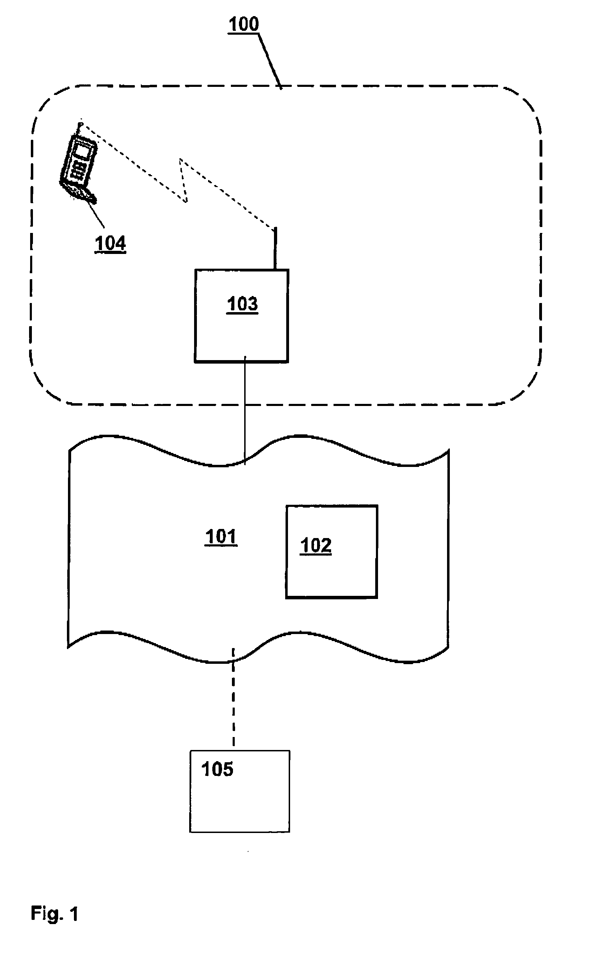

Figure 1 shows schematically a cell 100 of a mobile radio network. The mobile radio network comprises a core network 101 with a network instance 102 (in the following also called server unit 102) and a multitude of base stations, one thereof, a base station 103 is connected to a mobile radio terminal or device 104. The mobile device 104 is in the following also called source unit or source device 104. The present invention is not limited to such a mobile radio network. The communication network according to the present invention alternatively comprises communication channels such like mobile radio communication, SMS, MMS, Instant Messaging, email or online social networks. A target unit or target device 105 is connected by any communication means to the core network and no direct communication connection between the source unit 104 and the target unit 105 is necessary for the present invention.

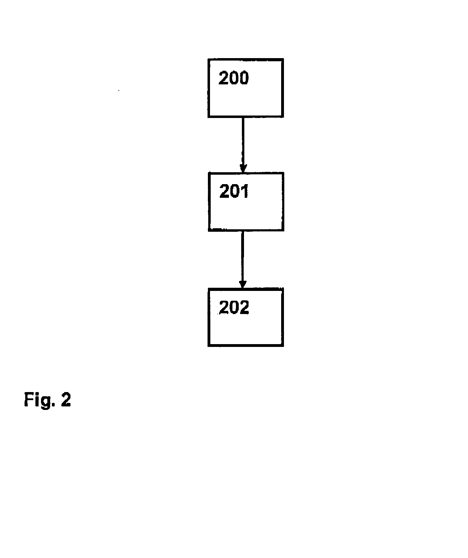

Figure 2 shows schematically a principal illustration of one embodiment of the present invention as a block diagram. In block 200 the mobile device 104 captures a soft link from a printed media by means of a mobile phone with a digital photo camera (known as 'Mobile Tagging'). The web content that is associated with the soft link can be displayed on the same capturing device but also according to the present invention on a specifically selected target device 105. The web content can be any content/media type (e.g. text, pictures, audio, video, multimedia, animated media). For example the method according to the present invention allows publishing houses to offer printed magazines, brochures or newspapers with a printed soft link that is captured by means of a commonly available mobile Smartphone. In block 201 the target unit 105 is selected by the source unit 104. In block 202 the web content (e.g. article, video) is displayed or played by choice on a comfortable device, environment and/or time. It can be displayed or played on a TV set when at home, on a notebook or eBook while on a journey. The display on such devices is more comfortable for the user because it implies a larger display size and better quality speaker than a small mobile phone would have. Furthermore the method according to the present invention allows network operators to offer such a service in partnership with publishing houses.

Furthermore it is possible that the source unit has selected a web page on a smartphone that contains a web link, or retrieved or received a web link from some other source. Instead of displaying or playing the associated web content on the small screen and speaker of the phone, the source unit chooses the display or play on another target device e.g. a TV set at home or an eBook while on a journey. This can be done immediately or at a later time.

Furthermore it is possible that the list of displayed target units is sorted by the type of accepted media. This information is retrieved by the mobile device 104 by means of the parameter 'Types of accepted media'. As far as the parameter is used, it is provided by the server unit within the information of registered target units. The list is sorted in the mobile device 104 so that the type of media in the web link is identified and compared with the accepted media of target units. All suited target units are displayed in the list at first place. Any target unit for which the accepted media can not be identified is displayed at lower positions in the list.

Furthermore it is possible that a payment is applied. After the target unit confirms the received web link back to the server unit, the server unit can confirm a payment event to a billing system. The billing system may be part of the server unit or an external system. The billing system can collect the payment events and bill the events to the user.

Furthermore it is possible that in addition to the display of target units on the screen of the mobile device 104, there may also be offered an option to save the current web link. The saved web link can be accessed at a later time by the user. The web link can then at a later time be applied for a selection of target units and be displayed at the target unit. This use case allows e.g. a capturing of a soft link while the user is on a journey and may not have the target unit ready. Later on when the user is back and the target unit is connected to the network, the user can select the target unit and display or play the web content.

Furthermore it is possible that the mobile device 104 has the following functionalities. The mobile device 104 captures a soft link from a media (e.g. printed media or other type of media with soft link) by means of scanner or camera. Alternatively, the link can also be held on the mobile device 104, retrieved or received from another source. The mobile device 104 stores the current status of connected target unit(s) with their unique id and name. The mobile device 104 displays the unit names of the registered target unit(s) as a selection for the user. The selection may be done repeatedly per each user action or the selection may be stored and applied again for the next user action until set differently. In this case the preferred target unit is displayed at first item in the list and/or is highlighted. The sequence of target units for selection in the list may be arranged by the type of media e.g. in case of an audio file type in the web link, an audio player is arranged as first item in the list. The sorting of target units is done by the accepted media types. After selection of a target unit by the user, it sends a display request with the following information to the server unit: 'Unique id of selected target unit and link to web content'. The mobile device 104 receives confirmation of transferred web link to the target unit from the server unit. The mobile device 104 may display the information of transferred web link on the display. When the web link is available on the mobile device 104, the selection of the target unit may not be done Immediately. Instead the mobile device 104 offers the selection to store the web link. The stored web link can be revoked by the user at a later time and the selection of the target unit can be done then. The storage supports a number of links for later selection and display or play.

Furthermore it is possible that the target unit has the following functionalities. It receives the web link from the server unit, it confirms the received web link back to the server unit and it requests and receives the web content from the web content server and displays or plays the received web content.

Furthermore it is possible that the server unit has the following functionalities. It receives the display requests from the source unit containing the unique id of the target unit and the web link. It identifies the addressed target unit from the display request from the source unit and it sends the web link to the target unit and receives confirmation. Furthermore the server unit may send a billing event to a billing system that is integrated or externally arranged. This billing event is sent by the server unit as soon as the target unit has confirmed the reception of the web link.

Furthermore it is possible that an always-on (permanent) connectivity between the source unit and the server unit and between the server unit and the target unit is required. This can be achieved by any type of data access. In case of lost connection, the source unit or the target unit will try to re-establish the connection. TCP protocol may be used to recognize if a connection is offline. The method of established connectivity implies that the server unit has permanent access to the source unit and the target unit and that it knows and stores the addresses of the source unit and the target unit e.g. IP addresses. Alternatively an on-demand connectivity could be used.

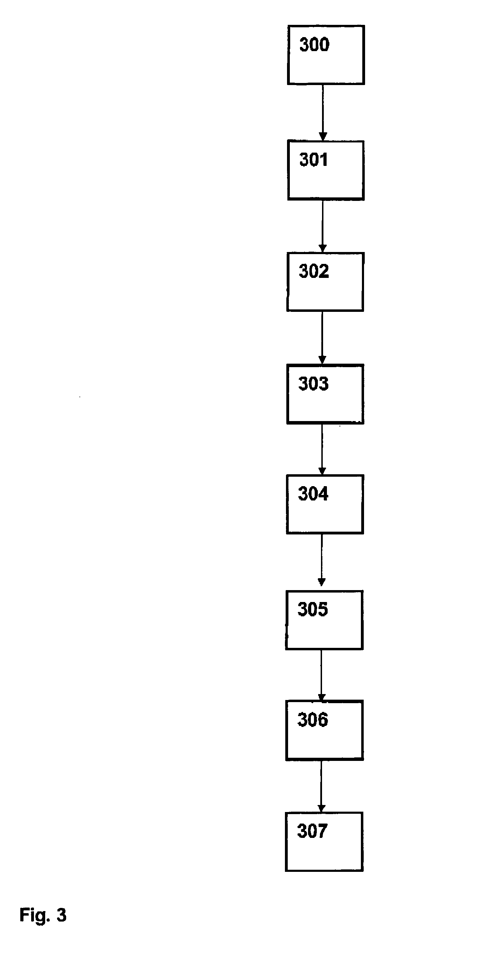

Figure 3 shows schematically an illustration as a block diagram of a further embodiment of the method according to the present invention. The following sequence applies for a regular user action to capture a soft link and to display or play the associated web content on a selectable device. In block 300 the user captures with the mobile device 104 the soft link from the printed media, wherein the link leads to the web content. Alternatively the link is held on the mobile device 104 or retrieved or received from other sources. In block 301 the selection of target unit(s) is displayed on the screen of the mobile device 104. The target unit is displayed with its unit name. The user selects the target unit, on which the web link shall be transferred and the associated web content shall be displayed or played. The selection is done among the mobile device 104and the connected target unit(s). In case of selection of a target unit, in block 302 the mobile device 104 sends a display request (containing web link and unique id of the target unit) to the server unit. The selection of the mobile device 104 for display or play of the web content is also possible, in this case the next steps will not apply. In block 303 the server unit identifies the mobile device 104 and the associated user account. It identifies the target unit by means of the user account and the unique id. In block 304 the server unit transfers the web link to the target unit. In block 305 the target unit confirms the received web link back to the server unit. In block 306 the target unit requests and receives the web link from the web content server via regular methods e.g. HTTP request and via internet. The server unit confirms the transferred web link back to the source unit or the mobile device 104. In block 307 the target unit displays or plays the web content on its screen or speaker. If applicable navigation within the web content may be done via existing control methods of the target unit. The mobile device 104 receives confirmation of transferred web link to the target unit from the server unit and it may display the information on its screen that the web link has been transferred. For transfer between the mobile device 104, the target unit or the server unit it is possible to use any networking protocol, e.g. HTTP or RADIUS (Remote Authentication Dial In User Service).

Furthermore it is possible that a service subscription ensures that the units can be identified for the respective user and that an authentication and authorization can be done during the registration of the units (target and source) at the server unit. The following parameters are definable during the subscription of the service between the user and the service provider. The usemame and password are defined for a user account. Then with the username and the password a user account is setup at the server unit. The usemame and password are commonly used during the registration of the source and the target unit at the server unit and for later administration of the user account. Furthermore the username can be either a predefined name by the user, that is unique on the server unit. Or alternatively the usemame can be a unique ID of the source unit e.g. the MSISDN or IMSI in case that the source unit has cellular/mobile access.

Furthermore it is possible that the units are setup with predefined data as prerequisites for the registration and service. The username/password as part of the data is defined during the subscription process. Some of the other data may be pre-configured already e.g. at the supplier or service provider. The source unit is pre-configured with the server unit address, it has a connection (e.g. internet access) to communicate with the server unit and it is setup with the usemame and password. The target unit is setup with the username and password and it is pre-configured with the server unit address. Beyond the defined username/password, each target unit is pre-configured with its own unit name (e.g. 'eBook') and optionally an own unique id (could be e.g. MAC address or mobile MSISDN or IMSI). Alternatively to the configuration of the unique id, the unique id can be assigned by the server unit. The target unit has a connection (e.g. internet access) to communicate with server unit. Optionally the types of accepted media are pre-configured. The server unit is setup with the user account, that is determined by the usemame and password and it has a connection (e.g. internet access) to communicate with the source and the target unit. The server unit address in the source and the target unit is e.g. configured as URL, which is resolved by means of standard DNS mechanism.

During the registration procedure the source unit and the target unit(s) register to the server unit. The registration indicates that the registered unit is ready for service.

The source unit has possibly the following functionalities for registration procedure. It registers to the server unit to announce that it is online and ready for service. This registration includes the usemame and password for authentication and authorization. It may request the registration status of associated target units from server unit. It replies to keep-alive requests from the server unit. It receives and stores information about connected target units from server unit. Optionally an additional parameter 'types of accepted media' for each target unit is received within the information of connected target units. After registration it displays the usemame and registration state to the user, so that the user can identify the successful registration and associated usemame.

The target unit has possibly the following functionalities for registration procedure. It registers to the server unit to announce that it is online and ready for service. The registration includes the usemame and password for authentication and authorization. Additionally it includes information about its own name and optionally the own Unique id. Optionally an additional parameter 'types of accepted media' is transferred in the registration process. After registration it displays the username and registration state to the user so that the user can identify the successful registration and associated username and the associated source unit. It replies to keep-alive requests from the server unit.

The server unit has possibly the following functionalities for registration procedure. It receives and confirms registration requests from the source unit and the target unit(s) including authentication and authorization. It identifies the associated source unit and the associated target unit(s) which belong together i.e. to one user account. The identificator is the username that is commonly used by the target unit and the source unit(s). If the unique id of the target unit is not sent during the registration, the server unit assigns alternatively the IP address of the target unit as unique id. This information must be updated with each de/re-registration of that target unit because the IP may change. It keeps the registration states and address information of the associated source unit (username, address e.g. IP) and target units (username, address (e.g. IP), unit name, unique id, optionally types of accepted media). In case of registration or de-registration of units, it sends information of all registered target unit(s) to the source unit with the following information: Unit names, unique id's and optionally types of accepted media of connected target unit(s). It receives requests about registration status from the source unit and replies registration information of all target units. It sends keep-alive requests to the target units. In case of an unconfirmed keep-alive request, it removes that unit from the list of online units and informs the source unit. It sends keep-alive requests to the source unit. In case of an unconfirmed keep-alive request, it removes that unit from the list of online units.

Furthermore the keep-alive procedures possibly maintain the current online status of units at the server unit. This is required in order to keep the list of selectable target units on the source unit updated. In regular cases, the units will de-register when they are disconnected. In power-off or failure cases however, the de-registration can not be applied properly. In these cases the keep-alive ensures the updated state of online connections of the units. The following keep-alive method applies. The server unit utilizes a keep-alive mechanism (e.g. utilize TCP layer) for connection between the server unit and the source unit or the target unit(s). If the server unit detects e.g. a non-replying target unit, i.e. the number of registered units changes, the server unit informs the source unit about the online state by sending registration status with the unit names and unique ids of the registered target units.

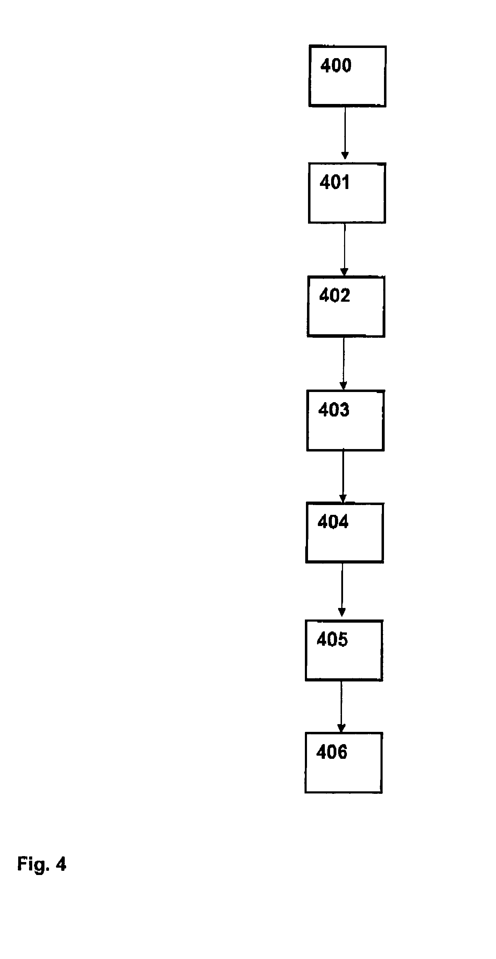

Figure 4 shows schematically as a block diagram an exemplary registration process for the target unit. In block 400 the target unit sends a registration request to the server unit containing username/password, its own unit name, its own unique id, optionally the types of accepted media. In block 401 the server unit stores the target unit registration associated with the user account. In block 402 the server unit informs the mobile device 104 about all registered target units with the following information: unit name, unique id of unit(s), optionally types of accepted media. In block 403 the mobile device 104 updates the list of target units. In block 404 the mobile device 104 confirms the updated list back to the server unit. In block 405 the server unit replies to the target unit with confirmation of registered target unit and if the mobile device 104 is ready or not ready. In block 406 the target unit displays the information of successful registration incl. the usemame and information if the mobile device 104 is ready or not ready.

Furthermore it is possible that the target unit sends a de-registration request to the server unit containing its own unit name and its unique id. The server unit deletes the target unit registration and informs the source unit about de-registration by sending registration status with following information: unit name and unique id of all remaining registered target unit(s). The source unit updates the list of target units and confirms the updated list back to the server unit. The server unit replies to the target unit with confirmation of the de-registered target unit. The target unit displays the information of successful de-registration incl. the usemame.

Furthermore it is possible that the target unit disconnects without de-registration. The server unit does not receive response from the disconnected target unit during a keep-alive cycle and informs the source unit about the removed target unit by sending registration status with following information: unit name and unique id of all remaining registered target unit(s). The source unit updates the list of target units and confirms the updated list back to the server unit.

Furthermore it is possible that the source unit disconnects without de-registration. The server unit does not receive response from the disconnected source unit during a keep-alive cycle and the server unit does not inform the source unit about changes in connected target units until the source unit is registered again. Then the server unit sends information about de-registered source units to all registered target units and all target units display the information of the de-registered source unit incl. the username. The server unit stays tuned for registration or de-registration of any units.

Furthermore it is possible that the source unit sends a registration request containing username and password to the server unit. The server unit stores the registration status of the source unit associated with the user account and the server unit checks the list of connected target units and it informs the source unit by sending registration status with following information: unit name and unique id of target unit(s). The source unit updates the list of target units and confirms the updated list back to the server unit. The server unit sends information about the registered source unit to all registered target units and all target units display the information of successful registration of the source unit incl. the usemame.

Furthermore it is possible that the source unit sends a de-registration request to the server unit. The server unit stores the registration status of the source unit associated with the user account, confirms the de-registration back to the source unit and sends information about the de-registered source unit to all registered target units. All target units display the information of de-registered source unit incl. the usemame. The server unit starts listening for a source unit registration request and continues listening to a target unit registration or de-registration request.

## Claims

1. Method for information retrieval in a communication network, wherein information retrieval comprises at least three steps, wherein a first step comprises the transmission of a reference information from a mobile source device (104) to a network instance (102), wherein the reference information is an image of a barcode from an accessible media or a related information that is derived from the barcode from an accessible media, wherein a second step comprises the transmission of a target information to the network instance (102), wherein the target information comprises information related to a selected target device (105), wherein a third step comprises the transmission of a usable information from the network instance (102) to the target device (105), wherein the usable information is related to the reference information, wherein the first step has expired before the second step begins and wherein the second step has expired before the third step begins, wherein the usable information is a media content, the media content being used by the target device (105) at a predetermined time or time interval, wherein the source device (104) has a Public Land Mobile Network interface and both the reference information and the target information is transmitted via the Public Land Mobile Network interface.

2. Method according to claim 1, wherein one or more target devices (105) are selectable by the source device (104).

3. Method according to one of the preceding claims, wherein the one or more target devices (105) are listed in a target list that is available on the source device (104).

4. Method according to one of the preceding claims, wherein the source device (104) is connected with the network instance (102) by an internet connection and the one or more target devices (105) are connected with the network instance (102) by an internet connection.

5. Method according to one of the preceding claims, wherein the usable information is a media content or a link information linked with a media content.

6. Method according to one of the preceding claims, wherein the media content is used by the target device (105) at a predetermined time, wherein the predetermined time or time interval is set by the source device (104).

7. Method according to one of the preceding claims, wherein the transmission of the usable information from the network instance (102) to the target device (105) is billed by a service provider.

8. System for information retrieval, wherein the system comprises a mobile source device, a network instance and at least one target device, wherein the information retrieval comprises the transmission of a reference information from the mobile source device (104) to the network instance (102) and the transmission of a target information to the network instance (102), wherein the reference information is an image of a barcode from an accessible media or a related information that is derived from the barcode from an accessible media, wherein the target information comprises information related to the target device (105), and the transmission of a usable information from the network instance (102) to the target device (105), wherein the usable information is related to the reference information, wherein the usable information is a media content, the media content being used by the target device (105) at a predetermined time or time interval, wherein the source device (104) has a Public Land Mobile Network interface and both the reference information and the target information is transmitted via the Public Land Mobile Network interface.

9. Program comprising a computer readable program code for information retrieval, wherein the information retrieval comprises the transmission of a reference information from a mobile source device (104) to a network instance (102) and the transmission of a target information to the network instance (102), wherein the reference information is an image of a barcode from an accessible media or a related information that is derived from the barcode from an accessible media, wherein the target information comprises information related to a selected target device (105), and the transmission of a usable information from the network instance (102) to the target device (105), wherein the usable information is related to the reference information, wherein the usable information is a media content, the media content being used by the target device (105) at a predetermined time or time interval, wherein the source device (104) has a Public Land Mobile Network interface and both the reference information and the target information is transmitted via the Public Land Mobile Network interface.

10. Computer program product for information retrieval comprising a computer readable program code according to claim 9, wherein the information retrieval comprises the
transmission of a reference information from a mobile source device (104) to a network instance (102) and the transmission of a target information to the network instance (102), wherein the reference information is an image of a barcode from an accessible media or a related information that is derived from the barcode from an accessible media, wherein the target information comprises information related to a selected target device (105). and the transmission of a usable information from the network instance (102) to the target device (105), wherein the usable information is related to the reference information, wherein the usable information is a media content, the media content being used by the target device (105) at a predetermined time or time interval, wherein the source device (104) has a Public Land Mobile Network interface and both the reference information and the target information is transmitted via the Public Land Mobile Network interface.

11. Mobile source device (104) for information retrieval, wherein the mobile source device (104) comprises a digital photo camera to capture an image of a barcode as a reference information, wherein the information retrieval comprises the transmission of the reference information from the mobile source device (104) to a network instance (102) and the transmission of a target information to the network instance (102), wherein the reference information is an image of a barcode from an accessible media or a related information that is derived from the barcode from an accessible media, wherein the target information comprises information related to a selected target device (105), and the transmission of a usable information from the network instance (102) to the target device (105), wherein the usable information is related to the reference information, wherein the usable information is a media content, the media content being used by the target device (105) at a predetermined time or time interval, wherein the source device (104) has a Public Land Mobile Network interface and both the reference information and the target information is transmitted via the Public Land Mobile Network interface.
